# EUROPEAN PATENT APPLICATION

(11) **EP 1 513 147 A2**
(43) Date of publication of application: **09.03.2005**
(21) Application number: 04020264.0
(22) Date of filing: 26.08.2004
(51) Int. Cl.: G11B 19/12

(54) **Video display unit**

(30) Priority: 05.09.2003 JP 2003314046
(71) Applicant: ORION ELECTRIC CO., Ltd., Takefu-City, Fukui 915-8555 (JP)
(72) Inventor: Tsubokawa, Yukio, Takefu-city Fukui 915-8555 (JP)
(74) Representative: Goddar, Heinz J., Dr.

(57) **Abstract**

It is an object of the invention to provide a video display unit (1) which is capable of reducing power consumption without tuning off a screen itself, and capable of preventing an operator from forgetting to turn off a power supply so as to be easily operated by the operator. It is checked as to whether a music CD where no video information is stored is reproduced (S100), and if an energy saving setting is effected in the case of the music CD, a display screen is rendered dark in a standby state by decreasing luminance of the display screen without turning off the display screen. Further, if a key input is effected for a predetermined time interval, the display screen is not rendered in the standby state (S103), while if the key input is effected even in the case of setting to the standby state, the display screen is returned to the normal state (S107). Still further, if the reproduction of the CD is ended in the standby state, the power supply is automatically rendered in an OFF state.

## Description

### FIELD OF THE INVENTION

The invention relates to a video display unit for reading out and displaying information stored in plural kind of storage disks such as a CD (Compact Disk), a DVD (Digital Versatile Disk) and the like.

### BACKGROUND OF THE INVENTION

In the case where information stored in plural kind of storage disks such as a CD, a DVD and the like is reproduced, it is a matter of course that information of various patterns has to be reproduced. In the case of the DVD, it stores therein image information and audio information owing to its large capacity thereof, while in the case of the CD, there is a case that only audio information is stored like a music CD. In the case of only audio information, image is not displayed, and hence nothing is displayed on a display unit. If the display unit is kept in such a normal state, it causes a problem of generating extra power consumption.

To cope with such a problem, for example, JP 2001-167501A discloses a portable disk reproduction unit provided with a display part for displaying image when reproducing a disk in which image such as maps or video and the like is stored, and displaying character information relating to a music when reproducing a CD, and control means for turning off the display part after displaying character information relating to a music to be reproduced next for a predetermined time interval when the CD is reproduced.

According to the foregoing JP 2001-167501A, although the reduction of power consumption is intended by turning off a screen of the display part per se, the portable disk reproduction unit is rendered in a power off state when the screen is turned off, causing a problem that an operator forgets to turn off the power while misunderstanding the unit is turned off. Further, in the case of composite electronic equipment integrated with a TV (television), a VCR (Video Cassette Recorder) and the like, it is conceived that another operation other than the display of characters is effected during the reproduction of the CD, however, even if such an operation is effected, it is not confirmed as to whether such an operation is effected with precision while the screen is kept in a turned-off state.

### SUMMARY OF THE INVENTION

Accordingly, it is an object of the invention to provide a video display unit which is capable of reducing power consumption without tuning off a screen itself, and capable of preventing an operator from forgetting to turn off a power supply so as to be easily operated by the operator.

The video display unit of the invention comprises a read part capable of reading out information stored in plural kind of storage disks, a reproduction part for reproducing information read out by the read part, a display part for displaying video, and a control part for controlling so as to display information reproduced by the reproduction part on the display part, wherein the control part is comprised of disk identification means for identifying a kind of storage disks, storage means for storing setting data relating to rate of reduction of luminance of the display part, and display control means for reading out the setting data from the storage means in the case where the disk identification means identifies a specific storage disk, and setting the luminance of the display part at a standby state where the luminance is more decreased than that in a normal state.

Further, the control part includes detection means for detecting that an optional key is operated, and the display control means controls to return the luminance of the display part to that in the normal state when the detection means outputs the detection after the luminance of the display part is set at the standby state.

Further, the display control means controls so as to set the luminance of the display part at the standby state when the detection means does not output the detection for a predetermined time interval from the start of the reproduction of the information by the reproduction part.

Still further, the control part includes power supply control means to turn off a power supply of the entire unit in the case where the luminance of the display part is in the stand by state at the end of reproduction of information by the reproduction part.

More still further, the setting data is set by inputting optional data by an operator.

With the configuration set forth above, in the case where the specific storage disk is identified, the luminance of the display part is rendered in the standby state where the luminance in more decreased than that in the normal state on the basis of setting data relating to luminance of a display part so that power consumption can be reduced compared with a case where the normal state continues, and further since the display part is not turned off, it is possible to prevent the operator from forgetting to turn off the power supply.

Further, since the control part includes detection means for detecting that the optional key is operated, wherein if the optional key is operated after the display part is set at the standby state, the display part is returned to the normal state, so that the display screen is rendered in a normal bright state immediately after the operation by the operator, thereby rendering the operation easy

If the luminance of the display part is rendered in the standby state in the case where there is no output of detection for a predetermined time interval from the start of reproduction of information in the reproduction part, the normal state is maintained for a time period of high probability of operation by the operator, thereby avoiding inconvenience of difficulty to the display screen by the operator when the operator operates the display part.

Further when the power supply is turned off in the case where the luminance of the display part is kept in the standby state at the end of reproduction of information by the reproduction part, the power supply is automatically turned off even if the operator does not turn off the power supply so that waste of power consumption is not generated. For example, it is assumed that an operator falls asleep while reproducing a music CD, however, even in such a case, the power supply is automatically turned off.

If the operator can arbitrarily set the setting data relating to rate of reduction of the luminance of the display part, it is possible to set the luminance at brightness suited to operator's taste. For example, in the case of using the display part at daytime, the luminance of the display part is set at high intensity while in the case of using the display part when going to bed at night, the luminance can be set at low intensity, so that the luminance of the display part can be set at an appropriate intensity depending on each case.

### BRIEF DESCRIPTION OF THE DRAWINGS

Fig. 1 is an entire block diagram of a video display unit according to an embodiment of the invention;
Fig. 2 is a view for explaining an energy saving set screen; and
Fig. 3 is a flow chart showing processing in the video display unit according to the embodiment of the invention.

### PREFERRED EMBODIMENT OF THE INVENTION

An embodiment of the invention is now described in detail. Since the embodiment set forth hereunder is a preferable concrete example for working the invention, it is technically and variously limited, but the invention is not limited to the embodiment set forth hereunder unless explicitly described to limit the invention.

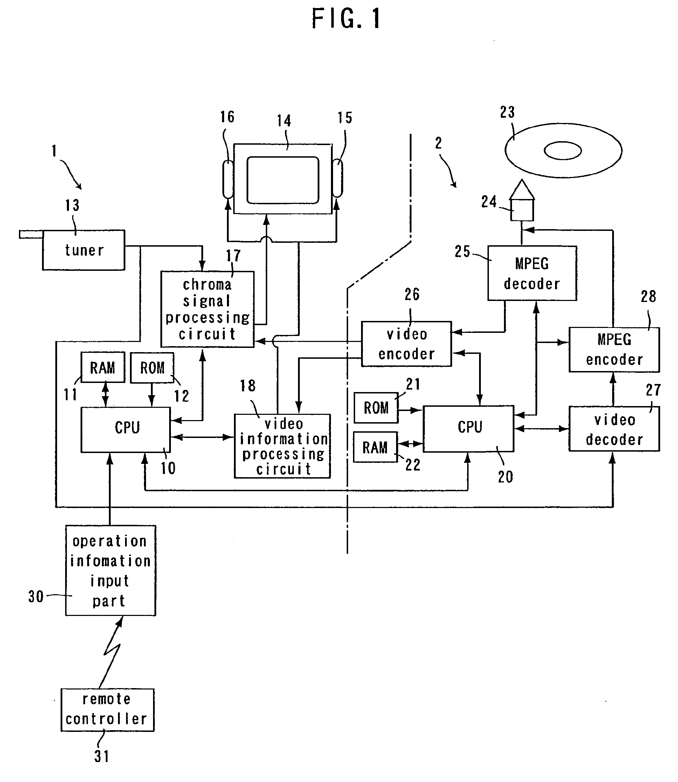

Fig. 1 is an entire block diagram of the video display unit according to the embodiment of the invention. A video display main unit 1 includes a main CPU 10 serving as a control part for effecting information processing relating to the entire control of the video display main unit 1, a RAM 11 and a ROM 12, respectively serving as storage means, wherein the main CPU 10 reads out a program stored in the ROM 12 and various setting data and the like stored in the RAM 11 to control them.

The video display main unit 1 further includes a tuner 13 for receiving a television signal from an outside, a monitor 14 serving as a display part for displaying video, and left and right speakers 15 and 16 which are built in the monitor 14. An output signal from the tuner 13 is processed by a chroma signal processing circuit 17, wherein video information is transmitted to the monitor 14 and subjected to display control while audio information is transmitted to an audio information processing circuit 18 through the main CPU 10 and audio is outputted form the left and right speakers 15 and 16. Operation information from a remote controller 31 which is received by an operation information input part 30 is to be inputted to the main CPU 10. The transmission and reception of a clock signal and data are effected by 12CBUS control, not shown, between the main CPU 10 and the chroma signal processing circuit 17. Setting data relating to brightness and contrast of a display screen is stored in the RAM 11, and the main CPU 10 reads out the setting data from the RAM 11, if need be, and transmits the read out setting data to the chroma signal processing circuit 17 whether luminance of the display screen is set. The setting data can be set in several stages depending on the degree of brightness of the display screen. For example, in the case where the display screen is rendered dark based on an energy saving setting, the setting data in that stage corresponding to the darkness is inputted through the remote controller 31 and stored in the RAM 11 so that the main CPU 10 reads out the changed setting data from the RAM 11 and transmits it to the chroma signal processing circuit 17, where the luminance is decreased.

Meanwhile, the video display main unit 1 is also provided with a storage disk reproduction unit 2 which reproduces plural kind of storage disks such as a CD, a DVD and the like. The storage disk reproduction unit 2 includes a CPU 20 for reproduction serving as effecting information processing relating to the control for reproduction, a ROM 21 for storing a program and the like and a RAM 22 for storing setting data and the like. Information stored in a disk 23 which is rotated by a rotary control unit, not shown, is read out through a pickup 24, and it is decoded by an MPEG decoder 25. Since the decoded information is digital information, it is analogized by a video encoder 26 and transmitted to the chroma signal processing circuit 17 and the audio information processing circuit 18, wherein analogized information is displayed as image on the monitor 14 of the video display main unit 1 while it is outputted as audio by the left and right speakers 15 and 16 built in the monitor 14.

A video decoder 27 provided in the side of the storage disk reproduction unit 2 is connected to the tuner 13, wherein an analog signal received by the tuner 13 is converted into a digital signal and the converted digital signal is compressed by an MPEG encoder 28, then it subjected to a storage processing in the disk 23 through the pickup 24.

The pickup 24 is, for example, provided with a read laser for a DVD and a read laser for a CD, wherein a corresponding read laser effects read operation upon setting of the storage disk. Accordingly, the CPU 20 for reproduction can detect either of the read lasers operates, then it can identify the set storage disk. In the storage disk such as a DVD and a CD, there is stored information relating to the storage disk, namely, a TOC (Table of Content) information in the innermost peripheral region of the storage region, wherein the kind of storage disk can be identified by firstly reading out the TOC information at the start of reproduction of the storage disk. Identified information of the storage disk is transmitted from the CPU 20 for reproduction to the main CPU 10, and it is used for effecting display control of the monitor. For example, in the case where the setting of the CD storing music information alone is identified, the main CPU 10 displays a static screen on the monitor 14 and also outputs audio information from the left and right speakers 15 and 16, while if the monitor 14 is set at energy saving, described later, the luminance of the monitor 14 is decreased to be rendered in a standby state, thereby reducing the power consumption.

The end of reproduction of the storage disk is effected by transmitting from the CPU 20 for reproduction to the main CPU 10, for example, information that a read signal is not outputted from the read laser to stop the operation of the pickup 24, which was rendered in the standby state. The main CPU 10 effects the display control for returning the display screen from the standby state to the normal state in response to the end of reproduction of the storage disk and a power supply control for automatically turning off a power supply of the unit.

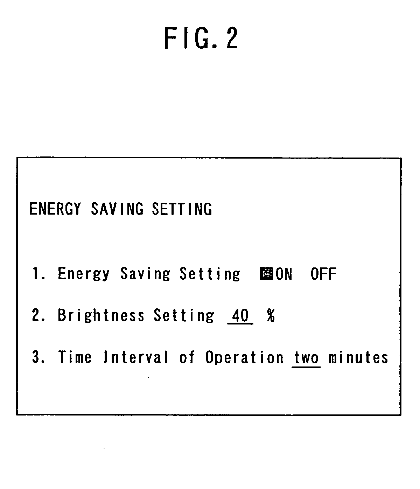

In the case where various data are set, an operator displays a set screen on the monitor 14 and operates the remote controller 31 so as to input various data. Fig. 2 shows an energy saving set screen. According to this set screen, the energy saving setting is effected or not by selecting ON or OFF in item 1. If the energy saving setting is effected, although a static screen is displayed on the monitor 14 in the case where the CD storing therein music information is set in the storage disk reproduction unit 2 and the like, it is possible to set to what extent luminance can be reduced in the case of such a standby state of the monitor 14. The rate of reduction of luminance can be inputted by percentage of the brightness in the normal state by setting the brightness in item 2. In this example, the brightness is set at 40% relative to that in the normal state. Further, in the case of setting the monitor 14 at the standby state, it is also possible to set a time interval when the key operation is not effected, wherein the standby state is set depending on how much the time interval continues. The time interval is inputted by the unit of minute in item 3. In this example, if the key operation is not effected for two minutes, the standby state is set. In such a manner, if the time interval of the key operation is set, there does not occur a trouble that the display screen frequently becomes dark during the key operation.

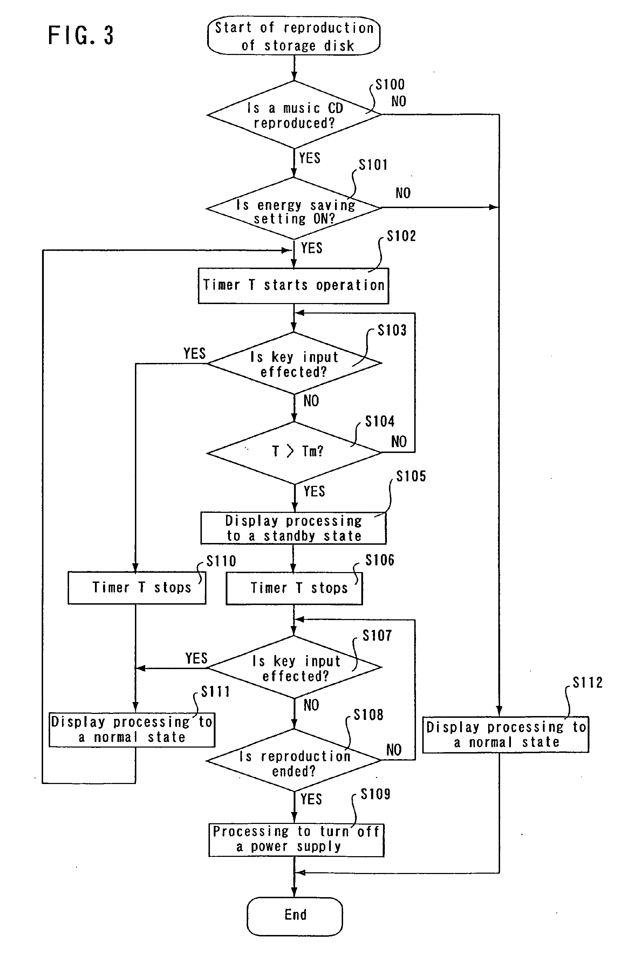

The flow chart showing the processing of the embodiment set forth above is now explained with reference to Fig. 3. If the reproduction of the storage disk is started, the CPU 20 for reproduction identifies which kind of storage disk is set. Then, the identified data is transmitted to the main CPU 10 where it is checked as to whether the storage disk is a disk in which no dynamic information is stored, for example, a CD storing therein the music information alone (hereinafter referred to as music CD) (S100). If the storage disk is not the music CD, a display processing is effected while the luminance of the monitor 14 is kept in the normal state (S108). If the storage disk is identified as the music CD, it is checked as to whether the energy saving setting is ON (S101), while if the energy saving setting is OFF, the display processing is effected so that the display screen is kept in the normal state (S112), and if the energy saving setting is ON, a timer T starts operation (S102).

It is checked as to whether an optional key input is effected after the start of operation of the timer T (S103). If the key input is not detected, it is checked as to whether the number of counts by the timer T exceeds a time interval (Tm) which is set by the energy saving set screen shown in Fig. 2 (S104), and if the number of counts by the timer T exceeds the time interval (Tm), the display screen of the monitor 14 is rendered in the standby state which is decreased in luminance to the extent of the rate of reduction which is set in brightness of the energy saving set screen shown in Fig. 2 (S105). If the number of counts by the timer T does not exceed the time interval (Tm) in step S104, the program returns to the step S103 where it is checked as to whether the key input is present or not, and when the key input is detected, the timer T stops in operation (S110), so that the display screen is subjected to the display processing so as to be kept in the normal state (S111). Then, the program returns to step S102 where the timer T starts operation again.

After subjecting to the display processing to the standby state in step S105; the operation of the timer T stops (S106) where it is checked as to whether the optional key input is effected or not (S107). If the key input is detected, the display processing for returning the display screen to the normal state is effected (S111), then the program returns to step S102 where the timer T starts operation again. If the key input is not detected, it is checked as to whether the CPU 20 for reproduction detects the end of reproduction of the music CD (S108), and if the end of reproduction is detected, the program is ended while a power supply of the entire unit is rendered in the OFF state (S109). Accordingly, when the reproduction of the music CD is ended, in the case where the display screen is rendered in the standby state at the energy saving setting, the power supply is automatically rendered in the OFF state.

Although the power supply is automatically rendered in the OFF state upon completion of reproduction according to the flow chart showing in Fig. 3, the display screen may be kept in the standby state. Further, the display screen may be set to the normal state upon completion of reproduction, and also can be set at a user-friendly manner, or an operator-friendly manner.

The features disclosed in the foregoing description, in the claims and/or in the accompanying drawings may, both separately and in any combination thereof, be material for realising the invention in diverse forms thereof.

## Claims

1. A video display unit (1) comprises:
a read part (24) capable of reading out information stored in plural kind of storage disks;
a reproduction part (25, 26) for reproducing information read out by the read part;
a display part (14) for displaying video; and
a control part (10, 11, 12, 20, 21, 22) for controlling so as to display information reproduced by the reproduction part on the display part;
wherein the control part (10, 11, 12, 20, 21, 22) is comprised of disk identification means for identifying a kind of storage disks, storage means (11) for storing setting data relating to rate of reduction of luminance of the display part (14), and display control means for reading out the setting data from the storage means (11) in the case where the disk identification means identifies a specific storage disk, and setting the luminance of the display part (14) at a standby state where the luminance is more decreased than that in a normal state.

2. A video display unit according to Claim 1, wherein the control part (10, 11, 12, 20, 21, 22) includes detection means for detecting that an optional key is operated, and the display control means controls to return the luminance of the display part to that in the normal state when the detection means outputs the detection after the luminance of the display part (14) is set at the standby state.

3. A video display unit according to Claim 2, wherein the display control means controls so as to set the luminance of the display part at the standby state when the detection means does not output the detection for a predetermined time interval from the start of the reproduction of the information by the reproduction part (25, 26).

4. A video display unit according to Claim 1, wherein the control part (10, 11, 12, 20, 21, 22) includes power supply control means to turn off a power supply of the entire unit (1) in the case where the luminance of the display part (14) is in the stand by state at the end of reproduction of information by the reproduction part (25, 26).

5. A video display unit according to Claim 1, wherein the setting data is set by inputting optional data by an operator.
